# EUROPÄISCHE PATENTSCHRIFT

(11) **EP 3 244 181 B1**
(45) Veröffentlichungstag und Bekanntmachung des Hinweises auf die Patenterteilung: **30.12.2020**
(21) Anmeldenummer: 17170276.4
(22) Anmeldetag: 09.05.2017
(51) Int. Cl.: G01L 9/00

(54) **VERFAHREN ZUR HERSTELLUNG EINES SENSORELEMENTS MITTELS LASERSTRUKTURIERUNG**
METHOD FOR PRODUCING A SENSOR ELEMENT BY MEANS OF LASER STRUCTURING
PROCÉDÉ DE FABRICATION D'UN ÉLÉMENT DE CAPTEUR AU MOYEN DE STRUCTURATION LASER

(30) Priorität: 13.05.2016 DE 102016108985
(43) Veröffentlichungstag der Anmeldung: 15.11.2017
(73) Patentinhaber: Trafag AG, 8706 Bubikon (CH)
(72) Erfinder: DÜSING, Jan, 30163 Hannover (DE); KOCH, Jürgen, 30451 Hannover (DE); STUTTMANN, Oliver, 30161 Hannover (DE); BRÖTZMANN, Marc, 78052 Villingen-Schwenningen (DE); SIBER, Armin, 78315 Radolfzell (DE); ZEISEL, Dieter, 8127 Forch (CH)
(74) Vertreter: Kastel, Stefan

(56) Entgegenhaltungen:
- WO-A1-2011/012711
- Hielscher: "Strain gauges made of laser patterned hot stamping foil", , 21. Mai 2015 (2015-05-21), Seiten 762-765, XP055412167, DOI: 10.5162/sensor2015/P2.3 Gefunden im Internet: URL:https://www.ama-science.org/proceeding s/getFile/ZwN4Zj== [gefunden am 2017-10-03]

## Beschreibung

Die Erfindung betrifft ein Verfahren zur Herstellung eines Sensorelements für einen Drucksensor oder Kraftsensor. Außerdem betrifft die Erfindung eine durch ein solches Verfahren erhältliches Sensorelement sowie einen damit versehenen Sensor.

Kraftsensoren und Drucksensoren, deren Aufbau und deren typische Verwendungen sind beispielsweise aus der DE 101 31 688 B4, der DE 10 2004 024 919 A1, der DE 10 2004 024 920 B4, der DE 10 2004 063 598 A1, der DE 10 2005 012 686 A1, der DE 10 2006 023 724 B4, der DE 10 2006 033 266 B4, der DE 10 2009 024 576 B4, der DE 10 2009 030 702 A1, der DE 10 2012 100 942 A1 und der DE 10 2013 114 728 A1 sowie der DE 102 11 992 C2 sowie der EP 2 446 239 B1 bekannt.

Aus Hielscher: "Strain gauges made of laser patterned hot stamping foil", AMA Conferences 2015 - Sensor 2015 and IRS2 2015, Seiten 762-765, XP055412167, DOI 105162/sensor2015/P2.3, https://www.amascience.org/proceedings/getFile/ZwN4Zj== ist ein Verfahren zum Herstellen von Dehnmessstreifen durch Laserstrukturierung einer Heißprägefolie aus der Drucktechnik bekannt. Dabei wird eine Goldlage der Heißprägefolie so strukturiert, dass auf einer Trägerfolie Mäander und Anschlusspads entstehen, die anschließend zum Testen auf ein Stahlblech aufgepresst werden.

Aus der WO201/012711 A1 ist ein Verfahren zum Herstellen von Dehnmessstreifen bekannt, bei dem ein Dehmessstreifengitter mittels eines Bondingmaterials auf einem Träger derart aufgebracht werden, dass der Träger entfernbar ist.

In Sensoren des vorgenannten Standes der Technik werden häufig Dehnungsmessstreifen (DMS) zur Verformungsmessung an der Oberfläche von Bauteilen eingesetzt. Diese Verformungen können dehnender oder stauchender Art sein. Dehnungsmessstreifen basieren auf einer strukturierten Funktionsschicht, die über Dünn- oder Dickschichttechnologie auf einem oft mit einem Isolator beschichteten dehnbaren Substrat aus Silizium, Keramik oder Metall aufgebracht wird. Ein unter Druck stehendes Medium verursacht eine Auslenkung der Membran und damit eine Dehnung der Membranoberfläche, die typischerweise mit einer Funktionsschicht überzogen ist und die die zuweilen in Mäanderform aufgebrachten Dehnungsmessstreifen enthält. Es ist bekannt vier derartige Widerstände als Flächenwiderstand zu strukturieren und gemäss einer Messbrücke, d.h. insbesondere einer Wheatstone'schen Brückenschaltung, auszulegen. Die Strukturierung der Mäander kann typischerweise mit Hilfe von photolithographischen, nasschemischen Methoden erzeugt werden.

Aus dem vorerwähnten Stand der Technik sind Dünnfilmdrucksensoren, bekannt, deren Sensorelemente aus einem Substrat gefertigt sind, das aus einer hochfesten Stahllegierung (beispielsweise DIN Werkstoff 1.4542 oder Inconel) gefertigt wurde und eine reversibel verformbare Metallmembran besitzt. Auch bevorzugte Ausführungsbeispiele der vorliegenden Erfindung gehen vorzugsweise von einem derartigen Substrat und einer damit gefertigten Membran aus.

Mittels gängigen Halbleiterprozessen wie PVD (physical vapor deposition) oder CVD (chemical vapor deposition) können die Isolationsschichten und die Funktionsschichten aufgebracht werden. Die Isolationsschicht ist häufig eine Glasschicht SiOxNy, die Funktionsschicht besteht typischerweise aus Nickelchrom (NiCr) oder auch Titanoxinitrit (TiON, z.B. aus DE 3522427 C2 bekannt).

Schliesslich wird noch eine zusätzliche Kontaktschicht meist aus Nickel bestehend aufgebracht, die die elektrische Verbindung zur Elektronik ermöglicht. Üblicherweise kommen hier neben Löttechnik vor allem Drahtbondtechniken zum Einsatz.

Bei den DMS werden die Formänderung des Trägers (d.h. hier insbesondere der Membran, also insbesondere Dehnung/Stauchung) auf den DMS übertragen. Im DMS tritt eine Widerstandsänderung ein. Der DMS hat einen sogenannten "k-Faktor", welcher die Proportionalität der Widerstandsänderung ΔR zur Dehnung ε angibt, wie dies im Folgenden erläutert ist.

Der Widerstand des unbelasteten DMS ist: $R = ρ \frac{l}{A} = ρ \frac{4 ⋅ l}{{D}^{2} ⋅ π}$

Die einzelnen Formelzeichen stehen für folgende Größen:
ρ: spezifischer Widerstand
l: Drahtlänge
A: Querschnittsfläche
D: Durchmesser des Drahtes

Die Widerstandsänderung bei Belastung beträgt allgemein: $Δ R = \frac{\partial R}{\partial ρ} ⋅ Δ ρ + \frac{\partial R}{\partial l} ⋅ Δ l + \frac{\partial R}{\partial D} ⋅ Δ D ,$ Durch Differentiationen und Umformungen erhält man die relative Widerstandsänderung: $\frac{Δ R}{R} = \frac{Δ ρ}{ρ} + \frac{Δ l}{l} - \frac{2 ⋅ Δ D}{D}$ Die relative Widerstandsänderung ist von der Längs- und der Querdehnung abhängig. $ε = \frac{Δ l}{l} und {ε}_{q} = \frac{Δ D}{D} = - μ ⋅ ε$ Somit folgt: $\frac{Δ R}{R} = k ⋅ \frac{Δ l}{l} = k ⋅ ε$ wobei k den sogenannten k-Faktor darstellt: $k = \frac{Δ ρ}{ρ ⋅ ε} + 1 + 2 ⋅ μ$ Die einzelnen Formelzeichen stehen für folgende Größen:
*ε*: relative Längenänderung
*ε_{q}*: relative Querschnittsänderung
µ: Querdehnungszahl
k: k-Faktor

Die Dehnungsempfindlichkeit wird demnach durch den k-Faktor des verwendeten Materials definiert. NiCr hat einen k-Faktor von 2 und meist Einzelwiderstände zwischen 4 und 7 kOhm.

Nachteilig an den bekannten Sensorelementen ist der notwendige nasschemische Strukturierungsprozess, der eine Vielzahl von teuren Prozessschritten erfordert (Belacken, Trockenen, Belichten, Entwickeln des Photoresists, Ätzen der Struktur und Entfernen des Resists).

Strukturierte Funktionsschichten aus NiCr oder TiON besitzen k-Faktoren, typischerweise zwischen 2 und 5, weisen darüber hinaus aber eine außerordentlich hohe Langzeitstabilität bei einem zugleich tiefen Temperaturkoeffizienten von wenigen ppm/K auf. Die Langzeitstabilität der Nullpunktabweichung beträgt dabei bis zu 0.1% des Messbereiches über 10 Jahre, selbst bei Temperaturen von bis zu 125°C. Der Abweichung der Sensorempfindlichkeit ist gegenüber dem Nullpunkt nochmal um bis zu einen Faktor 5-10 besser [siehe MTZ Motorentechnische Zeitschrift 07-08 (2010) Vol. 71 page 14-19]. Das geringe Stromrauschen von -39 dB ermöglicht den optimalen Einsatz in einer Vielzahl von Applikationen (siehe tm - "Technisches Messen 77 (2010) 12 / DOI 10.1524/teme.2010.0111).

Aus DE 102013011157 B3 ist bekannt, dass mit einer einzigen Funktionsschicht gearbeitet werden kann, die auch als Kontaktschicht fungiert. Insbesondere wird der Einsatz eines Ultrakurzpulslasers im 30 piko-Sekunden-Bereich (die Pulsdauer beträgt 30*1 0⁻¹²s) für die notwendigen Strukturierungsaufgaben von kohlenstoffhaltigen Funktionsschichten mit einem k-Faktor von höher als 20, bevorzugt 30 beschrieben. Nachteilig ist jedoch die Limitierung des vorgeschlagenen Verfahrens auf die piezoresistiven Funktionsschichten die zwar einen hohen k-Faktor besitzen aber noch nicht langzeitstabil genug sind. Ebenso ist durch die zu wählenden geringen Randabstände die Hochspannungsfestigkeit des Drucksensorsystems herabgesetzt.

Aufgabe der Erfindung ist es, ein Verfahren zur Herstellung eines Sensorelements für einen Drucksensor bereitzustellen, mit dem ein langzeitstabiles, auch für Hochspannungseinsätze geeignetes genaues Sensorelement einfacher und kostengünstiger herstellbar ist.

Zum Lösen dieser Aufgabe wird ein Verfahren gemäß Anspruch 1 vorgeschlagen.

Vorteilhafte Ausgestaltungen sind Gegenstand der Unteransprüche. Ein mit dem Verfahren erhältliches Sensorelement und ein damit versehener Sensor sind Gegenstände der Nebenansprüche.

Die Erfindung schafft ein Verfahren zur Herstellung eines Sensorelements für einen Druck- oder Kraftsensor, umfassend die Schritte:
a) Bereitstellen eines zu verformenden Bauteils,
c) Aufbringen einer Sensorfunktions- und Kontaktschicht aus einem Material mit einem k-Faktor zwischen 2 und 10 auf das Bauteil,
d) Partielles flächenhaftes Abtragen des Materials der Sensorfunktions- und Kontaktschicht mittels eines Lasers derart, dass Dehnungsmessstreifen mit einer mäanderförmigen Widerstandstruktur und Kontaktpads stehenbleiben, wobei zum Abtragen des Materials Laserpulse aus der Gruppe von Laserpulsen verwendet werden, die
   - Laserpulse im sub-ps-Bereich,
   - Laserpulse aus einer breitbandigen Laserquelle mit einer Wellenlängenbandbreite von 10nm bis 70nm
   - Laserpulse aus einer breitbandigen Laserquelle mit einer Grundwellenlänge und einer Wellenlängenbandbreite von wenigstens 1%, vorzugsweise wenigstens 2%, am meisten bevorzugt wenigstens 3% der Grundwellenlänge,
   - durch ein Pulskompressionsverfahren komprimierte Laserpulse und
   - durch eine Hohlkernfaser geleitete Laserpulse
umfasst.

Vorzugsweise wird in Schritt a) eine Membran als Bauteil bereitgestellt.

Vorzugsweise wird Schritt d) derart durchgeführt, dass eine Struktur zum Bilden einer Messbrücke mit mehreren mäanderförmigen Widerständen stehenbleibt.

Es ist bevorzugt, dass Schritt d) enthält:
Abtragen des Materials derart, dass die durch die Kontaktpads belegte Fläche gleich oder kleiner als die Widerstandsstrukturfläche ist, welche innerhalb einer Außenumfanglinie um die Widerstandsstruktur liegt.

Es ist bevorzugt, dass Schritt d) enthält:
Abtragen des Materials derart, dass mäanderförmige Leitungspfade, die Widerstände der mäanderförmigen Widerstandsstruktur bilden, eine Breite von weniger als 100µm haben.

Es ist bevorzugt, dass Schritt d) enthält:
Abtragen von Material zum Erzeugen eines vorläufigen Widerstands der Widerstandsstruktur, Messen des elektrischen Widerstands des vorläufigen Widerstands und weiteres Abtragen von Material von dem vorläufigen Widerstand, falls der gemessene elektrische Widerstand niedriger als ein Zielwiderstand ist, und Stoppen des Materialabtrags, wenn der gemessene elektrische Widerstand gleich oder größer als der Zielwiderstand ist.

Es ist bevorzugt, dass Schritt a) enthält:
Bereitstellen eines metallischen Substrats oder eines Stahlsubstrats und Herstellen des Bauteils aus dem metallischen Substrat bzw. dem Stahlsubstrat.

Vorzugsweise wird als Bauteil eine Membran zur Verfügung gestellt. Alternativ kann auch ein Biegebalken oder ein sonstiges unter Kraft zu verformendes Element vorgesehen werden.

Eine bevorzugte Ausgestaltung des Verfahrens ist gekennzeichnet durch zwischen Schritt a) und Schritt c) durchzuführenden Schritt:
b) Aufbringen einer elektrisch isolierenden Schicht auf das Bauteil, wobei Schritt c) enthält:
Aufbringen der Sensorfunktions- und Kontaktschicht auf der das Bauteil überdeckenden elektrisch isolierenden Schicht.

Es ist bevorzugt, dass Schritt d) enthält:
Abtragen des Materials zwischen dem Rand des Bauteils und der stehengebliebenen Materialstruktur, die die Widerstandsstruktur und die Kontaktpads enthält derart, dass eine elektrische Hochspannungsdurchschlagfestigkeit von wenigstens 50 VAC, vorzugsweise wenigstens 100 VAC mehr insbesondere 500 bis 1000 VAC zwischen der stehengebliebenen Materialstruktur und dem Rand geschaffen wird.

Es ist bevorzugt, dass Schritt d) enthält:
Verwenden einer fs-Laserquelle mit einer Leistung von 100-300nJ, einer Wellenlänge von 480nm bis 1500nm, insbesondere 800nm, Pulsbreiten von 5fs bis 300fs, insbesondere 10 bis 100fs, mehr insbesondere 30fs, und einer Bandbreite zwischen 10nm und 70nm.

Es ist bevorzugt, dass Schritt c) enthält:
Auftragen von NiCr oder NiCr und Ni oder TiON als Material zum Bilden der Sensorfunktions- und Kontaktschicht.

Es ist bevorzugt, dass Schritt d) enthält:
Abtasten der abzutragenden Oberfläche mit einer derartigen Geschwindigkeit, dass Schritt d) in weniger als 1 Sekunde durchgeführt wird.

Weiter schafft die Erfindung ein Sensorelement, erhältlich durch ein Verfahren nach einigen der voranstehend erläuterten Ausgestaltungen.

Weiter schafft die Erfindung einen Sensor zum Erfassen von Druck oder Kraft enthaltend ein solches Sensorelement.

Nachteilig bei dem Verfahren nach der DE 102013011157 B3 ist insbesondere die Limitierung des vorgeschlagenen Verfahrens auf die piezoresistiven Funktionsschichten die zwar einen hohen k-Faktor besitzen aber noch nicht langzeitstabil genug sind. Ebenso ist durch die zu wählenden geringen Randabstände die Hochspannungsfestigkeit des Sensorsystems herabgesetzt. Weiterhin störend wirken sich bei einem flächenhaften Abtrag Interferenzeffekte aus die den Abtrag bei der Verwendung einer pico-Sekundenlaserquelle einschränken, insbesondere die Qualität desselbigen - dies wird im Folgenden noch näher erläutert.

Bei vorteilhaften Ausführungsformen der Erfindung wird erfolgt dagegen ein flächenhafter Abtrag mit einer fs-Laserquelle um die gewünschte WiderstandsSchicht (z.B. NiCr oder TiON) anzufertigen. Dabei können vorzugsweise Leistungen von 100-300 nJ, bei einer Wellenlänge von z.B. 800nm und Pulsbreiten von 30 fs sowie Bandbreiten zwischen 10 und 70nm verwendet werden, um die gewünschten Strukturierungen erzeugen.

Bei vorteilhaften Ausgestaltungen der Erfindung wird die Hochspannungsfestigkeit durch den Abstand der DMS-Struktur zum metallischen Rand der typischerweise leitend mit dem Gehäuse verbunden ist, festgelegt.

Industrieanwendungen wie der Bahnbereich oder explosionsgeschützte Anwendungen fordern zum Teil bis zu 500 ... 1000 VAC Durchschlagsfestigkeit. Das hier vorgestellte Verfahren bietet eine Designfreiheit, mit der solche Durchschlagsfestigkeiten ohne weiteres erzeugbar sind.

Vorzgusweise wird NiCr oder TiON als Material für die Funktionsschicht verwendet. Derartige Schichten benötigen einen Widerstand zwischen 4 und 8 kOhm. Erfindungsgemäß wird durch flächenhaften Abtrag mittels Laser eine Mäanderstruktur geschaffen. So liefert NiCr zum Beispiel einen spezifischen Flächenwiderstand von etwa 50-70 Ohm/Square, Polysilizium besitzt 15-25 Ohm/Square, die im Stand der Technik beschriebene Kohlenstoffschicht besitzen eher höhere Widerstände von 150 Ohm/Square.

Bei besonders bevorzugten Ausgestaltungen der Erfindung erfolgt ein Brückenabgleich zur Einstellung des nominalen Brückenwiderstandes. Dies kann insbesondere durch eine fortlaufende und simultane Messung während des Laserabtrags erfolgen.

Durch Verwendung eines sub-ps Strukturierungslasers lässt sich eine besondere Designfreiheit bei der Wahl des Layouts erreichen. Tests haben ergeben, dass mit ps-Lasern erzeugte Leiterbahnen Defekte haben und dadurch oft nicht leitend sind. Eingehende Untersuchungen hierzu ergaben, dass diese Defekte auf Interferenzeffekten bei dem Laserabtrag beruhen. Werden dagegen Laserpulse, wie sie als Alternativen bei der Erfindung vorgeschlagen werden, verwendet, lassen sich solche Interferenzeffekte und die damit einhergehenden Defekte bei insbesondere dünnen Leiterbahnen vermeiden.

Bei einer Ausgestaltung beträgt die Pulsdauer beträgt nur 10 ... 100 Femtosekunden (10⁻¹⁵s).

Eine weitere Möglichkeit, die störenden Interferenzeffekte bei der Laserstrukturierung zu vermeiden, besteht in der Verwendung einer breitbandigeren Strahlquelle (z.B. 30nm bei einer Wellenlänge von 800nm). Weitere Möglichkeiten, um Interferenzeffekte zu vermeiden, sind ein Pulskompressionsverfahren oder Verwenden einer Hohlkernfaser.

Eine bevorzugte Ausgestaltung der Erfindung schafft ein Sensorelement umfassend eine Membran sowie eine auf die Membran aufgebrachte Sensorfunktionsschicht, die zugleich als Kontaktschicht fungiert, angefertigt aus einem Material mit einem k-Faktor zwischen 2 und 10, dessen Dehnungsmessstreifen ein laserstrukturiertes Layout, insbesondere auf einem Isolator, vorzugsweise mit Pads in der Grösse oder kleiner der Grösse der mäanderförmigen Widerstandsstruktur besitzen, die mit einem sub-ps Laser erzeugt werden, um unerwünschte Interferenzeffekte bei der Strukturierung zu vermeiden.

Vorzugsweise wird ein Sensorelement mit einem optimierten Layout geschaffen, das eine höhere Spannungsfestigkeit ermöglicht.

Vorzugsweise wird ein Sensorelement mit einer Gesamtprozessdauer von < 1 Sekunde pro Teil erhalten.

Vorzugsweise wird das Verfahren mit einem Laserstrukturierungsprozess durchgeführt, der gleichzeitig den Nullpunkt und den Gesamtwiderstand der Brückenschaltung erfasst, dabei bildet der Nullpunkt die Zielregelungsgrösse des Prozesses (0 Ohm resp. 1-10 kOhm für den Gesamtwiderstand der Brückenschaltung), der zeitgleich zum eigentlichen Strukturierungsprozess abläuft.

Ein Ausführungsbeispiel wird im Folgenden anhand der beigefügten Zeichnungen näher erläutert. Darin zeigt:
- Fig. 1: einen Querschnitt durch einen aus einem Substrat mit aufgetragenen Schichten gebildeten Rohling für ein Sensorelement, um Schritte eines Herstellverfahrens für das Sensorelement zu verdeutlichen,
- Fig. 2: einen Aufbau für eine Laserstrukturierung des Rohlings aus Fig. 1, um an der obersten Schicht Material flächenhaft abzutragen, um so ein Layout für eine Messbrücke zu erhalten;
- Fig. 3: eine Fotografie eines Ziellayouts, das z.B. mit der Laserstrukturierung herzustellen ist;
- Fig. 4: eine Blockschaltung für eine geregelte Messtechnik, um mit dem Aufbau von Fig. 2 die gewünschte Struktur von Fig. 3 ohne einen separaten Nachtrimmschritt zu erzeugen;
- Fig. 5: das Ziellayout von Fig. 3 mit der Bezeichnung der Widerstände;
- Fig. 6: einen Graphen zum Bestimmen der Regelparameter für die Messtechnik von Fig. 4;
- Fig. 7: eine durch Laserabtrag erzielte Leiterbahn mit Defekten durch Interferenzeffekte;
- Fig. 8: eine durch Laserabtrag erzielte Leiterbahn ohne Defekte (gewünschtes Resultat);
- Fig. 9: einen Graph zur Darstellung des Interferenzeffekts, der zu den Defekten in der Struktur wie in Fig. 7 gezeigt führen kann;
- Fig. 10: eine Darstellung zur Verdeutlichung, wie der Interferenzeffekt vermieden werden kann.

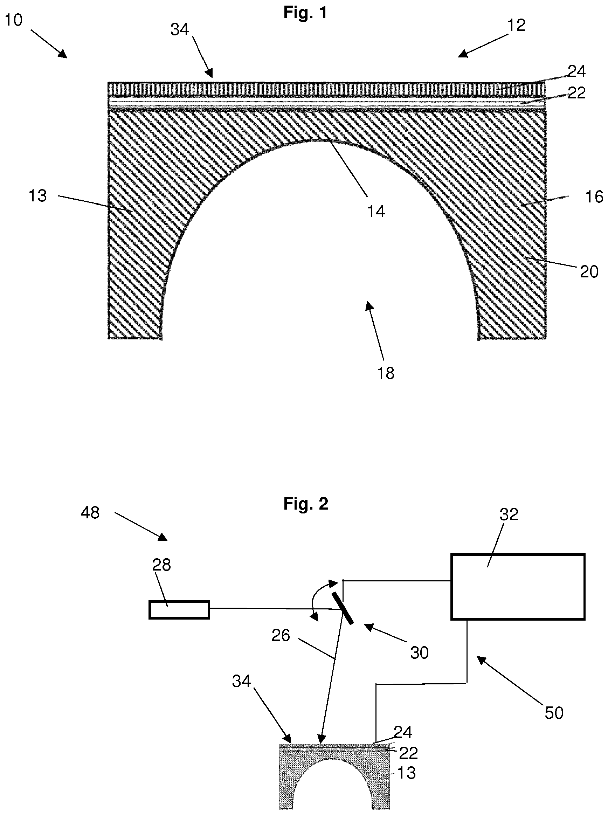

Wie in Fig. 1 dargestellt, wird zum Herstellen eines Sensorelements 10 für eine Ausgestaltung des hier interessierenden Verfahrens zunächst ein Rohling 12 bereitgestellt. Der Rohling weist ein zu verformendes Bauteil 13, hier z.B. eine Membran 14, auf, das aus einem Substrat 16 gebildet ist.

Grundsätzlich kommen für das hier interessierende Verfahren sämtliche zu verformende Bauteile 13 und Membrane 14, wie sie auch in dem eingangs erwähnten Stand der Technik im Einsatz sind, in Frage. Beispielsweise ist das Substrat 16 aus einer hochfesten Stahllegierung (beispielsweise DIN-Werkstoff 1.452 oder Inconel) gefertigt. Beispielsweise wird die Membran 14 derart hergestellt, dass aus einem Vollkörper von einer Seite her Material abgetragen wird, um so eine Sacköffnung 18 zu erhalten, die an dem anderen Ende der Öffnung durch die Membran 14 verschlossen wird, wobei die Sacköffnung 18 durch eine Ringwand 20 umgeben ist. In anderen Beispielen werden als Bauteile 13 Biegebalken (nicht dargestellt) für Kraftsensoren zur Verfügung gestellt. Es können z.B. eine Vielzahl von Biegebalken auf einem Wafer in einem Schritt gemeinsam verarbeitet werden.

Bei dem in den Figuren wiedergegebenen Beispiel einer Membran 14 wird auf die der Sacköffnung 18 entgegengesetzten Seite der Membran 14 durch übliche Verfahren, wie z.B. PVD oder CVD, eine Isolationsschicht 22 aus einem elektrisch isolierenden Material (z.B. SiO₂) aufgetragen.

Auf der Isolationsschicht 22 wird eine Sensorfunktions- und Kontaktschicht 24 ebenfalls durch die vorgenannten Verfahren aufgetragen. Hierzu wird ein Material mit einem k-Faktor zwischen 2 und 10 verwendet. Beispiel für derartige Materialien sind NiCr oder TiON.

Im Folgenden wird auf Fig. 2 Bezug genommen.

Der Rohling 10 wird nun durch Laserstrukturierung bearbeitet, siehe Fig. 2.

Hierzu wird ein gepulster Laserstrahl 26 aus einer Laserquelle 28 mittels hinreichend bekannter Scaneinrichtungen 30, gesteuert über eine Steuerung 32, derart über die obere Oberfläche der Membran 14 verfahren, dass das Material der Sensorfunktions- und Kontaktschicht 24 an ausgewählten Bereichen flächenhaft abgetragen wird, wobei an anderen Bereichen das Material stehen bleibt, um so eine Sensorfunktions- und Kontaktstruktur 36 gemäß einem vorgegebenen Ziellayout aus dem Material der Sensorfunktions- und Kontaktschicht 24 zu erzeugen.

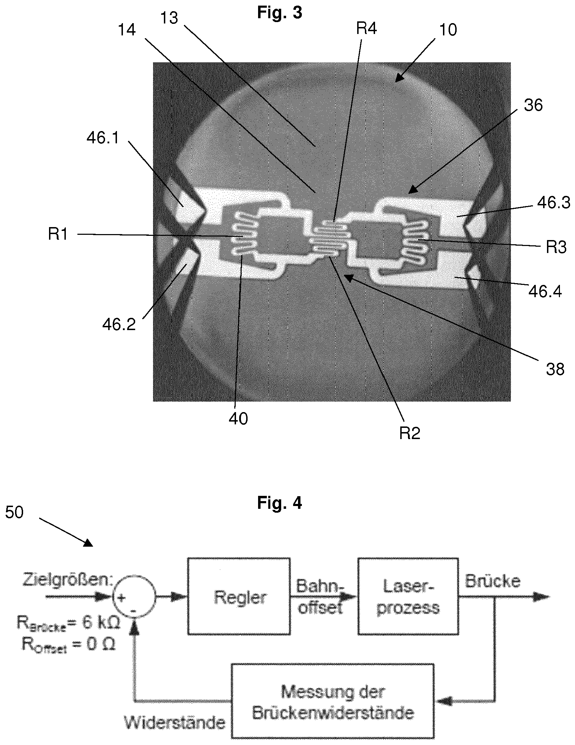

Ein Beispiel für das Ziellayout der Sensorfunktions- und Kontaktstruktur 36 ist in Fig. 3 wiedergegeben.

Es wird insbesondere eine Messbrücke 38 mit vier Widerständen R1, R2, R3, R4 erzeugt. Jeder Widerstand R1-R4 ist durch Leiterbahnen 40 aus dem Material der Sensorfunktions- und Kontaktschicht 24 gebildet, wobei die Leiterbahnen 40 im Bereich der Widerstände R1-R4 eine Mäanderform 42 aufweisen. Ein Teil der Widerstände R2, R4 dient als Dehnmessstreifen 44 zur Erfassung einer Verformung des Bauteils 13, die z.B. der Membran 14.

Weiter weist die Sensorfunktions- und Kontaktstruktur 36 einen ersten bis vierten Kontaktpad 46.1, 46.2, 46.3, 46.4 auf.

Der elektrische Widerstand der Widerstände R1-R4 wird bei gegebener Dicke insbesondere durch die Breite der stehengelassenen Leiterbahnen 40 bestimmt.

In Fig. 4 ist eine Messelektronik 50 wiedergegeben, mit der der Materialabtrag durch die in Fig. 4 wiedergegebene Laserstrukturierungsanordnung 48 derart gesteuert wird, dass Widerstände R1, R2, R3, R4 mit gewünschtem elektrischen Widerstand entstehen.

Hierzu gehen als Zielgrößen der Widerstand der Messbrücke 38 R_{Brücke} (z.B. 6k Ohm) sowie ein möglichst geringer Offset-Widerstand R_{Offset.} = 0 Ohm ein. Es wird nun zunächst eine breitere Leiterbahn 40 durch Laserstrukturierung als vorläufiger Widerstand erzeugt und anschließend oder simultan der Brückenwiderstand R_{Brücke} gemessen. Sind damit die Zielgrößen noch nicht erreicht, erfolgt mehr Materialabtrag.

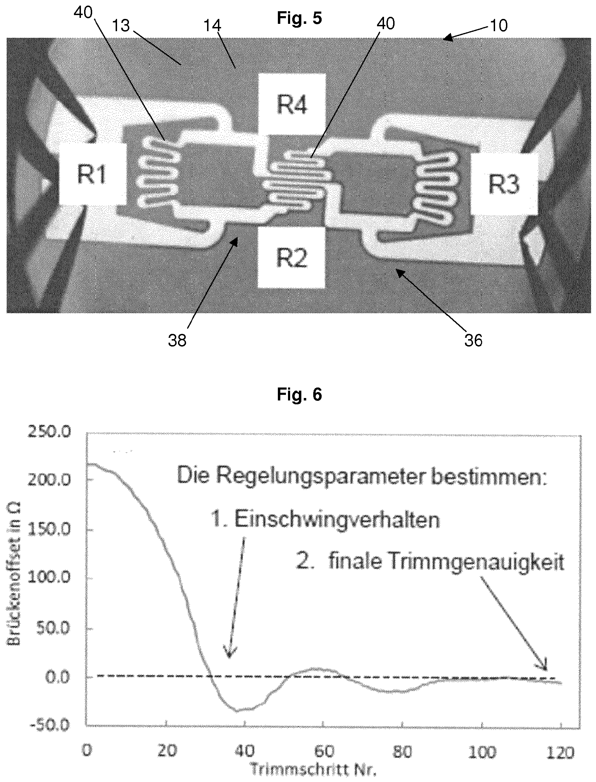

Fig. 5 zeigt die Bezeichnung der einzelnen Widerstände R1-R4; in Fig. 6 ist die Bestimmung der Regelungsparameter in einem Graph verdeutlicht.

Als Laserquelle 28 wird eine gepulste Laserquelle verwendet.

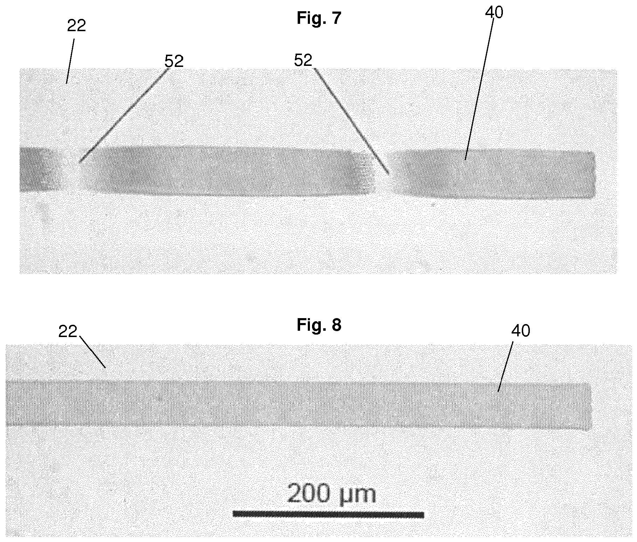

Fig. 7 zeigt ein Problem, das bei Herstellung von Leiterbahnen 40 mittels Laserabtrag mit gepulsten Laserquellen 28 entdeckt worden ist.

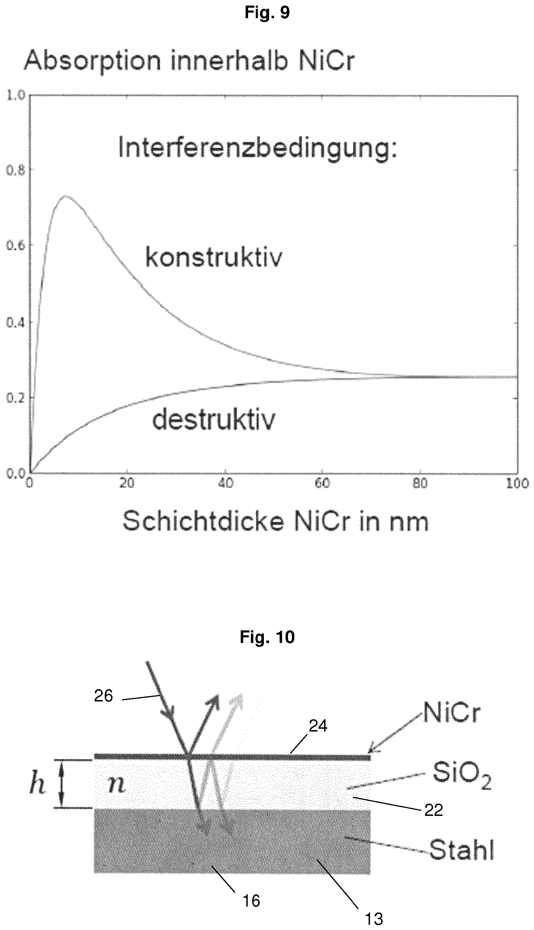

Die Leiterbahn 40 gemäß Fig. 7, die von ihrer Größe der idealen Leiterbahn 40 von Fig. 8 entspricht, ist mit einer Laserquelle 28 mit einer Pulsdauer im Pico-Sekundenbereich bei einer sehr geringen Bandbreite mit einer Wellenlänge von 1030 nm erzeugt worden. Wie in Fig. 9 angedeutet, gibt es aufgrund eines Zusammenhangs einer Absorption der Laserstrahlung 26 in der Sensorfunktions- und Kontaktschicht 24 je nach Schichtdicke Bedingungen, wo destruktive Interferenzen auftreten können. Es entstehen Streifen 52 durch destruktive Interferenz, wo die Leiterbahnen 40 unterbrochen sind.

Reduziert man dagegen die Pulsdauer und/oder erhöht die Bandbreite, kann man diese Interferenzbedingungen vermeiden, wie dies bei Fig. 8 angedeutet ist. Diese Leiterbahn 40 von Fig. 8 ist bei einer Pulsdauer von 30 bis 50 fs mit einer Bandbreite von 55 nm bei 800 nm Wellenlänge durch flächenhaften Abtrag des benachbarten Materials erzeugt worden.

Die Bedingungen, unter denen destruktive Interferenz vermieden werden kann, werden im Folgenden anhand der Darstellung in Fig. 10 näher erläutert. Hier ist das Substrat 16, beispielsweise Stahl, die Isolationsschicht 22, beispielsweise SiO₂, und die Sensorfunktions- und Kontaktschicht 24 zusammen mit dem einfallenden Laserstrahl 26 wiedergegeben.

Die Interferenz kann durch kurze Pulsdauer vermieden werden.

Die räumliche Pulslänge sollte dabei kürzer sein als der zurückgelegte Weg in der Isolationsschicht 22.

Demnach gilt für die Pulsdauer ${τ}_{p} \leq \frac{2 hn}{{c}_{0}}$ wobei
*τ_{ρ}* die Pulsdauer
h die Schichtdicke der Isolatorschicht
c₀ die Vakuum-Lichtgeschwindigkeit
n der Brechungsindex ist.

Wenn zum Beispiel h = 6µm, n ≈ 1,45 (SiO₂), dann gilt ${τ}_{p} \leq \frac{2 ⋅ 6 ⋅ {10}^{- 6} m ⋅ 1,45}{3 ⋅ {10}^{8 \frac{m}{s}}} = 58 fs .$

Mit Laserpulsen im sub-piko-Sekunden-Bereich können somit je nach Schichtdicke destruktive Interferenzeffekte vermieden werden.

Ein anderer Weg zum Vermeiden der Interferenzeffekte ist die Verwendung einer breitbandigeren Laserquelle. Alternativ oder zusätzlich kann ein Pulskompressionsprozess durchgeführt werden, oder es kann eine Hohlkernfaser zum Leiten des Laserstrahls 26 verwendet werden.

Das Material der Sensorfunktions- und Kontaktschicht 24 wird demnach so flächenhaft abgetragen, dass nur noch die Sensorfunktions- und Kontaktstruktur 36 mit der in den Fig. 3 und 5 gezeigten Ziellayout-Struktur stehen bleibt. Zum Rand des Bauteils 13, z.B. der Membran 14, wird dabei so viel Abstand gelassen, dass eine gewünschte Durchschlagsfestigkeit zu der meist metallischen Einfassung gegeben ist.

Hierzu werden insbesondere die Kontaktpads 46.1-46.4 entsprechend klein ausgestaltet. Deren Größe entspricht höchstens der von den Widerständen R1-R4 insgesamt belegten Fläche.

### Bezugszeichenliste:

- 10: Sensorelement
- 12: Rohling
- 13: Bauteil
- 14: Membran
- 16: Substrat
- 18: Sacköffnung
- 20: Ringwand
- 22: Isolationsschicht
- 24: Sensorfunktions- und Kontaktschicht
- 26: Laserstrahl
- 28: Laserquelle
- 30: Scan-Einrichtung
- 32: Steuerung
- 34: obere Oberfläche
- 36: Sensorfunktions- und Kontaktstruktur
- 38: Messbrücke
- 40: Leiterbahn
- 42: Mäanderform
- 44: Dehnmessstreifen
- 46.1: erster Kontaktpad
- 46.2: zweiter Kontaktpad
- 46.3: dritter Kontaktpad
- 46.4: vierter Kontaktpad
- 48: Laserstrukturierungsanordnung
- 50: Messelektronik
- 52: Streifen mit Unterbrechung
- R1: erster Widerstand
- R2: zweiter Widerstand
- R3: dritter Widerstand
- R4: vierter Widerstand

## Patentansprüche

1. Verfahren zur Herstellung eines Sensorelements (10) für einen Druck- oder Kraftsensor, umfassend die Schritte:
a) Bereitstellen eines zu verformenden Bauteils (13),
c) Aufbringen einer Sensorfunktions- und Kontaktschicht (24) aus einem Material mit einem k-Faktor zwischen 2 und 10 auf das Bauteil (13),
d) Flächenhaftes Abtragen des Materials der Sensorfunktions- und Kontaktschicht (24) mittels eines Lasers derart, dass Dehnungsmessstreifen (44) mit einer mäanderförmigen Widerstandstruktur und Kontaktpads (46.1, 46.2, 46.3, 46.4) stehenbleiben,
wobei zum Abtragen des Materials Laserpulse aus der Gruppe von Laserpulsen verwendet werden, die
• Laserpulse im sub-ps-Bereich,
• Laserpulse aus einer breitbandigen Laserquelle (28) mit einer Wellenlängenbandbreite von 10nm bis 70nm
• Laserpulse aus einer breitbandigen Laserquelle (28) mit einer Grundwellenlänge und einer Wellenlängenbandbreite von wenigstens 1%, vorzugsweise wenigstens 2%, am meisten bevorzugt wenigstens 3% der Grundwellenlänge,
• durch ein Pulskompressionsverfahren komprimierte Laserpulse und
• durch eine Hohlkernfaser geleitete Laserpulse
umfasst.

2. Verfahren nach Anspruch 1,
**dadurch gekennzeichnet,**
**dass** Schritt d) enthält:
Abtragen des Materials derart, dass die durch die Kontaktpads (46.1, 46.2, 46.3, 46.4) belegte Fläche gleich oder kleiner als die Widerstandsstrukturfläche ist, welche innerhalb einer Außenumfanglinie um die Widerstandsstruktur liegt.

3. Verfahren nach Anspruch 1 oder 2,
**dadurch gekennzeichnet,**
**dass** Schritt d) enthält:
Abtragen des Materials derart, dass mäanderförmige Leitungsbahnen (40), die Widerstände (R1-R4) der mäanderförmigen Widerstandsstruktur bilden, eine Breite von weniger als 100µm haben.

4. Verfahren nach einem der voranstehenden Ansprüche,
**dadurch gekennzeichnet,**
**dass** Schritt d) enthält:
Abtragen von Material zum Erzeugen eines vorläufigen Widerstands der Widerstandsstruktur, Messen des elektrischen Widerstands des vorläufigen Widerstands und weiteres Abtragen von Material von dem vorläufigen Widerstand, falls der gemessene elektrische Widerstand niedriger als ein Zielwiderstand ist, und Stoppen des Materialabtrags, wenn der gemessene elektrische Widerstand gleich oder größer als der Zielwiderstand ist.

5. Verfahren nach einem der voranstehenden Ansprüche,
**dadurch gekennzeichnet,**
**dass** Schritt a) enthält:
Bereitstellen eines metallischen Substrats (16) oder eines Stahlsubstrats und Herstellen des Bauteils (13) aus dem metallischen Substrat (16) bzw. dem Stahlsubstrat.

6. Verfahren nach einem der voranstehenden Ansprüche,
**gekennzeichnet durch** zwischen Schritt a) und Schritt c) durchzuführenden Schritt:
b) Aufbringen einer elektrisch isolierenden Isolationsschicht (22) auf das Bauteil (13),
wobei Schritt c) enthält:
Aufbringen der Sensorfunktions- und Kontaktschicht (24) auf der das Bauteil (13) überdeckenden elektrisch isolierenden Isolationsschicht (22).

7. Verfahren nach Anspruch 6,
**dadurch gekennzeichnet,**
**dass** Schritt d) enthält:
Verwenden von Laserpulsen mit einer Pulslänge *τₚ*, wobei gilt: ${τ}_{p} \leq \frac{2 hn}{{c}_{0}}$ wobei
*τₚ* die Pulsdauer
h die Schichtdicke der Isolatorschicht
c₀ die Vakuum-Lichtgeschwindigkeit
n der Brechungsindex ist.

8. Verfahren nach einem der voranstehenden Ansprüche,
**dadurch gekennzeichnet,**
**dass** Schritt d) enthält:
Abtragen des Materials zwischen dem Rand des Bauteils (13) und der stehengebliebenen Materialstruktur, die die Widerstandsstruktur und die Kontaktpads (46.1, 46.2, 46.3, 46.4) enthält derart, dass eine elektrische Hochspannungsdurchschlagfestigkeit von wenigstens 50 VAC, vorzugsweise wenigstens 100 VAC, mehr insbesondere 500 bis 1000 VAC, zwischen der stehengebliebenen Materialstruktur und dem Rand geschaffen wird.

9. Verfahren nach einem der voranstehenden Ansprüche,
**dadurch gekennzeichnet,**
**dass** Schritt d) enthält:
Verwenden einer fs-Laserquelle (28) mit einer Leistung von 100-300nJ, einer Wellenlänge von 480nm bis 1500nm, insbesondere 800nm, Pulsbreiten von 5fs bis 300fs, insbesondere 10 bis 100fs, mehr insbesondere 30fs, und einer Bandbreite zwischen 10nm und 70nm.

10. Verfahren nach einem der voranstehenden Ansprüche,
**dadurch gekennzeichnet,**
**dass** Schritt c) enthält:
Auftragen von NiCr oder NiCr und Ni oder TiON als Material zum Bilden der Sensorfunktions- und Kontaktschicht (24).

11. Verfahren nach einem der voranstehenden Ansprüche,
**dadurch gekennzeichnet,**
**dass** Schritt d) enthält:
Abtasten der abzutragenden Oberfläche mit einer derartigen Geschwindigkeit, dass Schritt d) in weniger als 1 Sekunde durchgeführt wird.

12. Verfahren nach einem der voranstehenden Ansprüche,
**dadurch gekennzeichnet,**
**dass** Schritt a) enthält:
Bereitstellen einer Membran (14) als Bauteil (13).

13. Sensorelement (10), erhältlich durch ein Verfahren nach einem der Ansprüche 2 bis 4 oder 8 oder 10.

14. Sensor zum Messen von Druck oder Kraft, enthaltend ein Sensorelement (10) nach Anspruch 13.

## Claims

1. Method for producing a sensor element (10) for a pressure or force sensor, comprising the steps of:
a) providing a component to be deformed (13),
c) applying to said component (13) a sensor functional and contact layer (24) from a material having a k-factor of between 2 and 10,
d) planar removal of the material of the sensor functional and contact layer (24) using a laser in such a way that
strain gauges (44) having a meander-shaped resistor structure and contact pads (46.1, 46.2, 46.3, 46.4) are left,
wherein for the removal of the material, laser pulses from the group of laser pulses are used which comprises
• laser pulses in the sub-ps range,
• laser pulses from a broadband laser source (28) having a wavelength bandwidth of 10 nm to 70 nm,
• laser pulses from a broadband laser source (28) having a fundamental wave length and a wave length bandwidth of at least 1%, preferably at least 2%, most preferably at least 3% of the fundamental wavelength,
• laser pulses compressed by a pulse compression process, and
• laser pulses passed through a hollow-core fiber.

2. Method according to claim 1,
**characterized in that**
step d) includes:
removal of the material in such a way that the area covered by the contact pads (46.1, 46.2, 46.3, 46.4) is equal to or smaller than the resistor structure area that is within an outer periphery line around the resistor structure.

3. Method according to claim 1 or 2,
**characterized in that**
step c) includes:
removal of the material in such a way that meander-shaped conduction tracks (40) forming resistors (R1-R4) of the meander-shaped resistor structure have a width of less than 100 µm.

4. Method according to any of the preceding claims,
**characterized in that**
step d) includes:
removal of material for producing a provisional resistor of the resistor structure, measuring the electrical resistance of the provisional resistor and further removal of material from the provisional resistor if the measured electrical resistance is smaller than a target resistance, and stopping the removal of material if the measured resistance is equal to or greater than the target resistance.

5. Method according to any of the preceding claims,
**characterized in that**
step a) includes:
providing a metallic substrate (16) or steel substrate and producing the component (13) from the metallic substrate (16) or from the steel substrate.

6. Method according to any of the preceding claims,
**characterized by** step b) to be performed between step a) and step c):
b) applying an electrically insulating layer (22) to the component (13), wherein step c) includes:
applying the sensor functional and contact layer (24) to the electrically insulating layer (22) that covers the component (13).

7. Method according to claim 6,
**characterized in that**
step d) includes:
using laser pulses having a pulse length τ_{ρ}, wherein: ${τ}_{p} \leq \frac{2 hn}{{c}_{0}}$ wherein
τ_{ρ} is the pulse length,
h is the layer thickness of the insulating layer,
c₀ is the speed of light in vacuum,
n is the refractive index.

8. Method according to any of the preceding claims,
**characterized in that**
step d) includes:
removing the material between the rim of the component (13) and the remaining material structure that includes the resistor structure and the contact pads (46.1, 46.2, 46.3, 46.4) in such a way that an electrical high-voltage dielectric strength of at least 50 VAC, preferably of at least 100 VAC, even more preferably of at least 500 to 1000 VAC between the remaining material structure and the rim is created.

9. Method according to any of the preceding claims,
**characterized in that**
step d) includes:
using a fs laser source (28) having a power of 100-300 nJ, a wavelength of 480 nm to 1500 nm, in particular 800 nm, pulse widths of 5 fs to 300 fs, in particular 10 to 100 fs, even more particularly 30 fs, and a bandwidth of between 10 nm and 70 nm.

10. Method according to any of the preceding claims,
**characterized in that**
step c) includes:
applying NiCr or NiCr and Ni or TiON as a material for forming the sensor functional and contact layer (24).

11. Method according to any of the preceding claims,
**characterized in that**
step d) includes:
scanning the surface to be removed at a speed such that step d) is performed in less than 1 second.

12. Method according to any of the preceding claims,
**characterized in that**
step a) includes:
providing a membrane (14) as a component (13).

13. Sensor element (10) obtainable by a method according to any of claims 2 to 4 or 8 or 10.

14. Sensor for measuring pressure or force, comprising a sensor element (10) according to claim 13.

## Revendications

1. Procédé de fabrication d'un élément de capteur (10) pour un capteur de pression ou de force, comprenant les étapes suivantes
a) fournir un composant à déformer (13),
c) l'application sur ledit composant (13) d'une couche fonctionnelle et de contact (24) du capteur en un matériau ayant un facteur k compris entre 2 et 10,
d) l'enlèvement planaire du matériau de la couche fonctionnelle et de contact (24) du capteur à l'aide d'un laser de telle manière que des jauges de contrainte (44) ayant une structure résistive en forme de méandre et des plots de contact (46.1, 46.2, 46.3, 46.4) sont laissés, dans lequel, pour l'enlèvement du matériau, on utilise des impulsions laser du groupe d'impulsions laser qui comprend
• les impulsions laser dans la sous-gamme de ps
• les impulsions laser provenant d'une source laser à large bande (28) ayant une largeur de bande de longueur d'onde de 10 nm à 70 nm,
• les impulsions laser provenant d'une source laser à large bande (28) ayant une longueur d'onde fondamentale et une largeur de bande de longueur d'onde d'au moins 1 %, de préférence d'au moins 2 %, de préférence d'au moins 3 % de la longueur d'onde fondamentale,
• les impulsions laser comprimées par un processus de compression d'impulsions, et
• les impulsions laser passées à travers une fibre à noyau creux.

2. Procédé selon la revendication 1,
**caractérisé en ce que**
l'étape d) comprend:
l'enlèvement du matériau de telle sorte que la surface couverte par les plots de contact (46.1, 46.2, 46.3, 46.4) soit égale ou inférieure à la surface de la structure résistive qui se trouve à l'intérieur d'une ligne périphérique extérieure autour de la structure résistives.

3. Procédé selon la revendication 1 ou 2,
**caractérisé en ce que**
l'étape d) comprend:
l'enlèvement du matériau de telle sorte que les pistes de conduction en forme de méandre (40) formant les résisteurs (R1-R4) de la structure résistive en forme de méandre aient une largeur inférieure à 100 µm.

4. Procédé selon l'une des revendications précédentes,
**caractérisé en ce que**
l'étape d) comprend:
l'enlèvement du matériau pour produire un résisteur provisoire de la structure résistive, la mesure de la résistance électrique du résisteur provisoire et l'enlèvement ultérieur du matériau du résisteur provisoire si la résistance électrique mesurée est inférieure à une résistance cible, et l'arrêt de l'enlèvement du matériau si la résistance mesurée est égale ou supérieure à la résistance cible.

5. Procédé selon l'une des revendications précédentes,
**caractérisé en ce que**
l'étape a) comprend:
fournir un substrat métallique (16) ou un substrat en acier et produire le composant (13) à partir du substrat métallique (16) ou du substrat en acier.

6. Procédé selon l'une des revendications précédentes,
**caractérisé par** l'étape b) à effectuer entre l'étape a) et l'étape c):
b) l'application d'une couche électriquement isolante (22) sur le composant (13),
l'étape c) comprenant:
l'application de la couche fonctionnelle et de contact (24) du capteur sur la couche électriquement isolante (22) qui recouvre le composant (13).

7. Procédé selon la revendication 6,
**caractérisé en ce que**
l'étape d) comprend:
l'utilisation des impulsions laser ayant une longueur d'impulsion τ_{ρ}, où: ${τ}_{p} \leq \frac{2 hn}{{c}_{0}}$ où
τ_{ρ} est la longueur d'impulsion,
h est l'épaisseur de la couche isolante,
c₀ est la vitesse de la lumière dans le vide,
n est l'indice de réfraction.

8. Procédé selon l'une des revendications précédentes,
**caractérisé en ce que**
l'étape d) comprend:
l'enlèvement du matériau entre le bord du composant (13) et la structure de matériau restante qui comprend la structure résistive et les plots de contact (46.1, 46.2, 46.3, 46.4) de manière à créer une rigidité diélectrique électrique à haute tension d'au moins 50 VAC, de préférence d'au moins 100 VAC, plus préférablement encore d'au moins 500 à 1000 VAC entre la structure de matériau restante et le bord.

9. Procédé selon l'une des revendications précédentes,
**caractérisé en ce que**
l'étape d) comprend:
l'utilisation d'une source laser fs (28) ayant une puissance de 100-300 nJ, une longueur d'onde de 480 nm à 1500 nm, en particulier 800 nm, des largeurs d'impulsion de 5 fs à 300 fs, en particulier 10 à 100 fs, plus particulièrement encore 30 fs, et une largeur de bande comprise entre 10 nm et 70 nm.

10. Procédé selon l'une des revendications précédentes,
**caractérisé en ce que**
l'étape c) comprend:
l'application de NiCr ou NiCr et Ni ou TiON comme matériau pour former la couche fonctionnelle et de contact (24) du capteur.

11. Procédé selon l'une des revendications précédentes,
**caractérisé en ce que**
l'étape d) comprend:
le balayage de la surface à enlever à une vitesse telle que l'étape d) est effectuée en moins de 1 seconde.

12. Procédé selon l'une des revendications précédentes,
**caractérisé en ce que**
l'étape a) comprend:
fournir une membrane (14) comme composant (13).

13. Élément capteur (10) pouvant être obtenu par un procédé selon l'une des revendications 2 à 4 ou 8 ou 10.

14. Capteur pour mesurer la pression ou la force, comprenant un élément capteur (10) selon la revendication 13.
